**Europäisches Patentamt**

**European Patent Office**

**Office européen des brevets**

(19)

(11) Numéro de publication: **0 017 581**
**B1**

(12) **FASCICULE DE BREVET EUROPEEN**

(45) Date de publication du fascicule du brevet:
**22.08.84**

(51) Int. Cl.³: **G 01 G 3/08,** G 01 G 3/18,
G 01 L 1/14, G 01 G 7/06

(21) Numéro de dépôt: **80400435.6**

(22) Date de dépôt: **01.04.80**

(54) **Récepteur de charge à parallélogramme d'une seule pièce et à transducteur capacitif.**

(30) Priorité: **02.04.79 FR 7908218**

(43) Date de publication de la demande:
**15.10.80 Bulletin 80/21**

(45) Mention de la délivrance du brevet:
**22.08.84 Bulletin 84/34**

(84) Etats contractants désignés:
**AT BE CH DE GB IT LI LU NL SE**

(56) Documents cités:
**DE - A - 2 758 986**
**FR - A - 2 364 441**
**FR - A - 2 381 295**
**GB - A - 1 088 873**
**SU - A - 176 697**
**US - A - 3 224 519**
**US - A - 3 240 281**
**US - A - 3 805 604**
**US - A - 4 103 545**

(73) Titulaire: **TESTUT-AEQUITAS, 8, rue Popincourt,**
**F-75011 Paris (FR)**

(72) Inventeur: **Estavoyer, Bernard, 66 rue de Damiette,**
**F-91190 Gif sur Yvette (FR)**

(74) Mandataire: **Corre, Jacques Denis Paul et al, Cabinet**
**Regimbeau 26, Avenue Kléber, F-75116 Paris (FR)**

## Description

La présente invention concerne un récepteur de charge applicable notamment dans les balances à usage commercial.

On connaît déjà des récepteurs de charge comportant un montant fixe solidaire d'un bâti, un montant chargé solidaire d'un plateau porte-charge, et deux bras articulés sur ces montants pour former avec eux un parallélogramme déformable. L'exemple le plus simple d'une telle structure est la balance de Roberval, et ses dérivés plus récents. Quoiqu'ils soient encore assez souvent utilisés, ces récepteurs de charge antérieurs, de conception purement mécanique, sont inadaptés à la tendance actuelle qui veut des balances à mesure électronique et à affichage numérique lumineux.

Un récepteur de charge du type précité est également décrit et représenté dans la demande de brevet français FR-A-2 364 441. L'ensemble des deux montants et des deux bras de ce récepteur est par contre réalisé d'une seule pièce et les articulations sont définies par des étranglements de la matière constitutive. Plus précisément, le récepteur de charge décrit dans ce document est associé à un transducteur formé de jauges de contraintes montées sur la face supérieure d'un barreau disposé entre le montant fixe et le montant chargé.

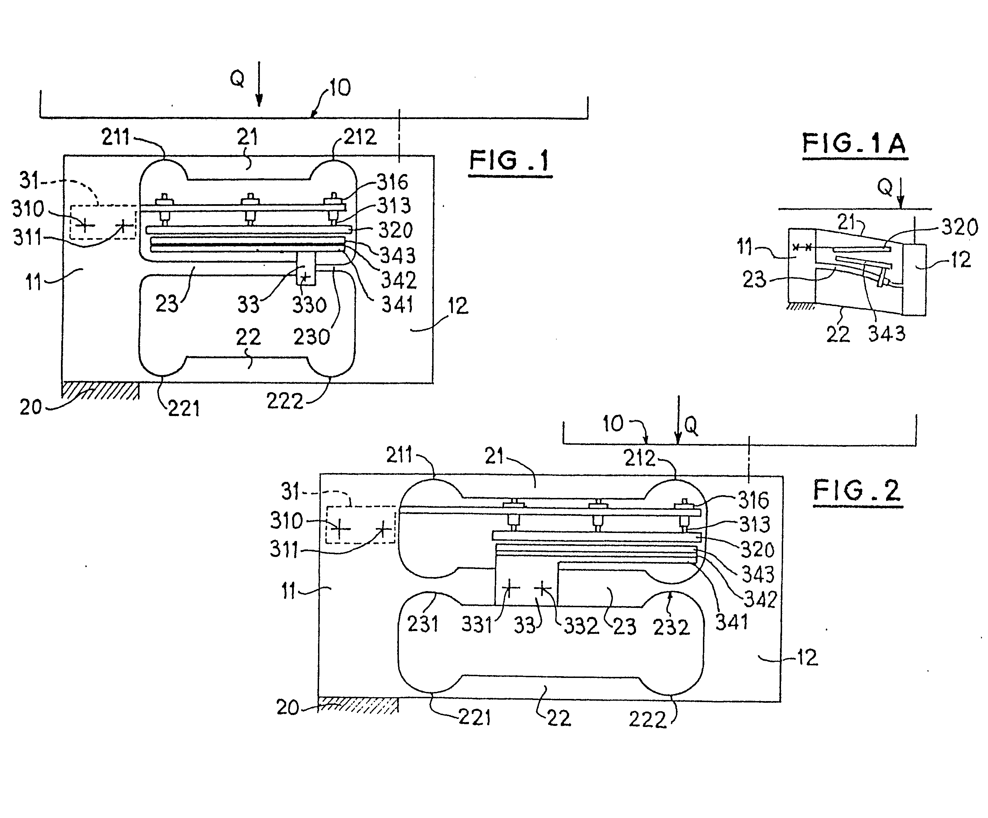

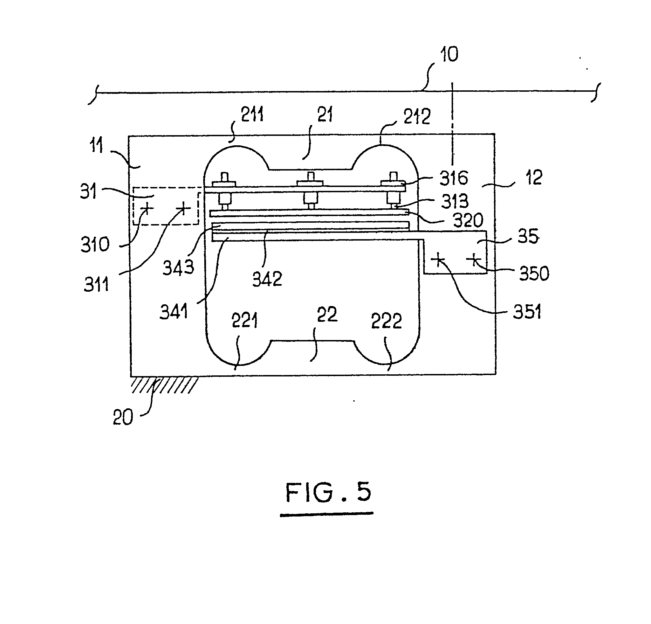

La demande de brevet britannique GB-A-1 088 872 décrit un récepteur de charge pour pesage comportant un plateau porte-charge supporté à chacun de ses quatre coins par un organe support élastique constitué soit d'un anneau selon le mode de réalisation représenté sur la fig. 2, soit de lamelles flexibles selon le mode de réalisation représenté sur la fig. 4. Des capteurs capacitifs sont associés aux supports élastiques et les signaux délivrés par chacun des quatre capteurs capacitifs sont additionnés pour obtenir un signal représentatif de la charge totale portée par le plateau.

Le brevet soviétique SU-A-176 697 décrit, d'ailleurs sommairement, une structure formant quadrilatère vibrant, destinée à opérer un pesage grossier en vue d'un classement d'objets d'après des limites de poids. Pour cela, un transducteur inductif associé génère un signal dont la fréquence dépend de la masse portée par le plateau.

Le brevet américain US-A-3 805 604 décrit un récepteur de charge pour pesage comprenant un châssis déformable généralement similaire au corps déformable décrit dans la demande de brevet français FR-A-2 364 441 précédemment citée. Par ailleurs, là encore, le récepteur comporte des jauges de contraintes.

La présente invention propose maintenant un récepteur de charge perfectionné, du type parallélogramme déformable, de conception plus simple que les récepteurs de charges antérieurement proposés et qui surtout s'affranchit des calculs et essais de mise au point relatifs aux jauges de contraintes.

La présente invention vient précisément fournir un récepteur de charge qui puisse être directement associé avec un transducteur capacitif en vue d'un affichage électronique, qui soit très compact, qui soit encore pratiquement insensible à la variation de position de la charge sur le plateau récepteur, et enfin qui permette d'obtenir une courbe de réponse très répétitive quelles que soient les conditions ambiantes, notamment en ce qui concerne la température.

Le récepteur de charge de l'invention est du type précité comprenant un montant fixe solidaire d'un bâti, un montant chargé solidaire d'un plateau porte-charge, et deux bras articulés sur ces montants pour former avec eux un parallélogramme déformable, dans lequel l'ensemble des deux montants et des deux bras est réalisé d'une seule pièce et les articulations sont définies par des étranglements de la matière constitutive.

Selon l'invention, le récepteur comporte en outre une première électrode montée solidaire du montant fixe, et une seconde électrode montée sur une partie du parallélogramme qui est mobile sous l'effet de la charge portée par le plateau, une partie de l'ensemble étant conformée pour appliquer un rappel élastique au montant chargé lorsqu'une masse est déposée sur le plateau de telle sorte que lesdites première et seconde électrodes forment en combinaison un transducteur de charge à condensateur dont la capacité, en charge, est liée à la valeur de la charge elle-même, et les supports du transducteur de charge capacitif, reliant respectivement les première et seconde électrodes au montant fixe et à ladite partie du parallélogramme mobile sous l'effet de la charge, sont agencés en sorte que la variation relative de l'écartement au repos de leurs électrodes en fonction de la température soit égale à la variation relative en fonction de la température du module d'élasticité du matériau de la partie fournissant la force de rappel élastique opposée à la charge.

Selon une première caractéristique secondaire de l'invention, le récepteur de charge comporte un troisième bras dont les extrémités font corps avec le montant fixe et le montant chargé, de telle sorte que ce troisième bras fournisse l'essentiel du rappel élastique imprimé au montant chargé en fonction de sa charge.

Dans un premier mode de réalisation particulier, les extrémités du troisième bras sont respectivement encastrées dans le montant fixe et le montant chargé, et la seconde électrode est montée solidaire du troisième bras en un point voisin du montant chargé, tandis que le troisième bras présente une section droite réduite entre ce point et le montant chargé, si bien que la seconde électrode est peu sensible à des couples de torsion latéraux exercés sur le montant chargé en raison d'un positionnement excentré de la charge. Du fait que la seconde électrode peut être montée très voisine du montant chargé, ce mode de réalisation présente une assez forte sensibilité quant au signal de sortie en fonction de la charge.

Dans un second mode de réalisation, l'extrémité du troisième bras côté montant chargé présente un étranglement mince tandis que son extrémité côté montant fixe présente un étranglement moins prononcé, fournissant l'essentiel du rappel élastique pour le montant chargé, la seconde électrode étant montée solidaire du troisième bras entre ses deux étranglements, si bien que cette seconde électrode est très peu sensible à des couples de torsion latéraux exercés sur le montant chargé en raison d'un positionnement excentré de la charge. Dans cette disposition, la sensibilité aux efforts de torsion latéraux est encore moindre que dans le premier mode de réalisation. Par contre, comme le point de fixation de la seconde électrode est situé dans la partie centrale du troisième bras plus rigide que ses extrémités, la sensibilité est à priori un peu inférieure.

Dans les deux premiers modes de réalisation qui viennent d'être définis, les première et seconde électrodes peuvent s'étendre latéralement, et être avantageusement de forme circulaire; par ailleurs, de manière à éviter toute erreur due au fait que les électrodes se déplacent latéralement l'une par rapport à l'autre en fonction de la charge, il est avantageux que les première et seconde électrodes présentent des surfaces sensiblement isométriques, la surface d'une des électrodes étant légèrement plus grande que celle de l'autre de telle sorte que la valeur de la capacité demeure inversement proportionnelle à l'écartement des deux électrodes, lui-même proportionnel à la charge.

Dans un troisième mode de réalisation, la seconde électrode est montée solidaire du montant chargé, et les deux électrodes présentent alors des surfaces allongées selon la direction générale des bras, la surface étant avantageusement, comme il vient d'être indiqué, légèrement plus grande pour l'une des électrodes que pour l'autre. Dans cet autre mode de réalisation, l'insensibilité aux efforts de torsion latéraux est moins prononcée, alors qu'en contrepartie la sensibilité à la charge est encore meilleure et la valeur de la capacité est une fonction simple du déplacement en translation des électrodes.

Le troisième mode de réalisation peut être réalisé économiquement sans le troisième bras parallèle aux deux premiers, qui intervient entre le montant fixe et le montant chargé. Un tel troisième bras permet cependant de séparer la fonction «définition du parallélogramme» de la fonction de rappel élastique.

Très avantageusement, la charge est mesurée en faisant le rapport de la capacité du transducteur de charge capacitif à celle d'un condensateur de référence, les supports du condensateur de référence étant agencés en sorte que la variation relative de l'écartement au repos de ses électrodes en fonction de la température soit égale à la variation relative en fonction de la température du module d'élasticité du matériau de la partie fournissant la force de rappel élastique opposée à la charge.

D'autres caractéristiques et avantages de l'invention apparaîtront à la lecture de la description détaillée qui va suivre, faite en référence aux dessins annexés, donnés pour illustrer à titre non limitatif différents modes de réalisation de la présente invention, et sur lesquels:

la fig. 1 est une vue latérale schématique du premier mode de réalisation particulier de la présente invention;

la fig. 1A est une vue simplifiée correspondant à la fig. 1 et illustrant la déformation du dispositif de la fig. 1 en charge;

la fig. 2 est une vue latérale schématique d'un second mode de réalisation de l'invention;

la fig. 3 est une vue latérale schématique d'un troisième mode de réalisation de l'invention;

la fig. 3A est une vue simplifiée correspondant à la fig. 3 et illustrant la déformation sous charge dans le troisième mode de réalisation de l'invention;

la fig. 4 est une vue très simplifiée illustrant comment on peut effectuer une compensation de température sur les électrodes du transducteur capacitif ou du condensateur de référence utilisé dans l'un des dispositifs de la présente invention; et

la fig. 5 est une vue latérale schématique d'une variante du troisième mode de réalisation sans troisième bras.

Sur l'ensemble des figs 1 à 3, la référence numérique 10 désigne un plateau porte-charge, qui est de nature à supporter en un point quelconque une charge désignée par la lettre Q. Sur un bâti illustré schématiquement en 20 est monté un montant fixe 11, tandis qu'un montant chargé 12 est rendu solidaire du plateau porte-charge 10. Entre le montant fixe 11 et le montant chargé 12 sont disposés deux bras 21 et 22. Le bras 21 est relié au montant fixe 11 par une charnière élastique 211 réalisée par un étranglement de la matière constitutive, tandis qu'une autre charnière 212 réalisée par un autre étranglement relie le même bras 21 au montant chargé 12. De manière analogue, le bras 22 est relié par un étranglement 221 au montant fixe 11 et par un étranglement 222 au montant chargé 12. On obtient ainsi une structure réalisée d'une seule pièce, et qui constitue un parallélogramme déformable.

Les figs 1 à 3 ont encore en commun le fait qu'un support d'électrode fixe 31 est fixé en 310 et 311 sur le montant fixe 11. Ce support 31 soutient par un ou plusieurs organes d'intermédiaires, en l'espèce des traversées isolantes en stéatite telles que 316 et des tiges de fixation d'électrodes telles que 313 une électrode fixe 320.

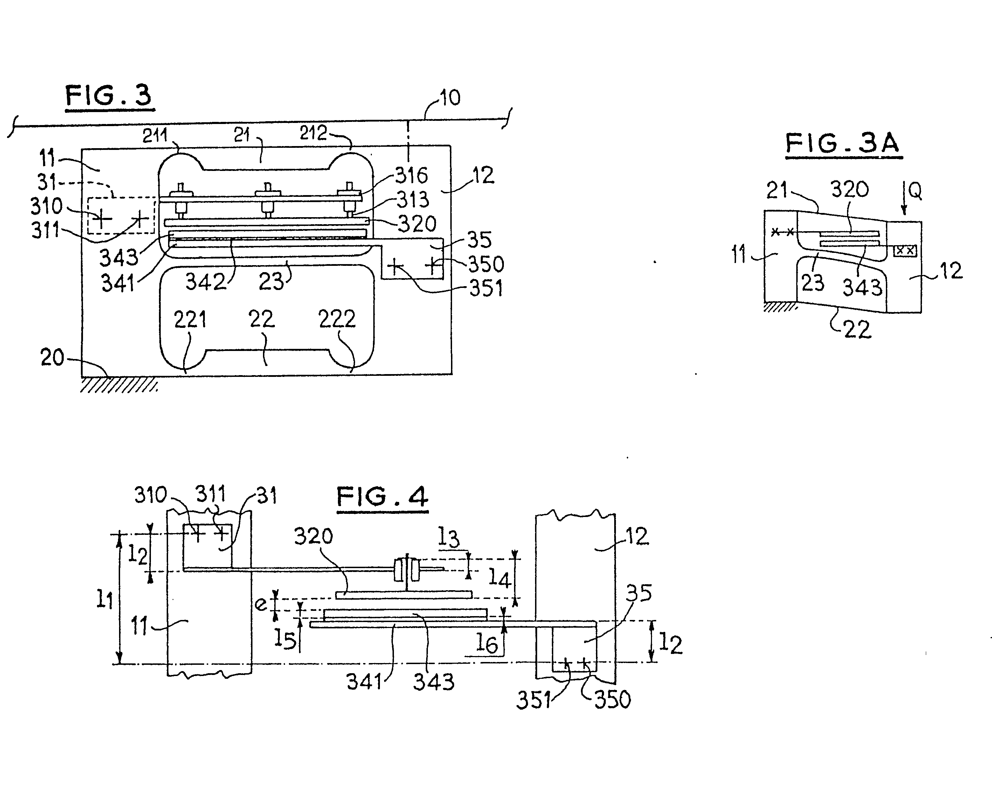

Les figs 1 à 3 ont encore en commun le fait que le parallélogramme se complète d'un troisième bras désigné par la référence 23 et monté entre le montant fixe et le montant mobile 12 dans une position intermédiaire entre les bras 21 et 22. Cela étant, la structure et la fonction du troisième bras diffèrent suivant les différentes figures étant observé d'ailleurs que le troisième bras peut même sous certaines conditions être omis dans le mode de réalisation de la fig. 3.

Sur la fig. 1, le bras 23 forme une poutre encastrée de section sensiblement constante vis-à-vis du montant fixe 11. Au bout de cette poutre encastrée de section constante est ménagé un support d'électrode mobile 33, fixé en 330 sur le bras 23. De l'autre côté, soit tout de suite après le support 33, soit après une certaine portion du bras qui conserve la section droite illustrée en 23, le bras 23 se continue d'une seule pièce par une partie 230 dont la section droite est inférieure à celle qui existe par la partie reliée au montant fixe 11, cette section 230 venant s'insérer elle aussi à la façon d'une poutre encastrée dans le montant mobile 12.

Le support 33, surmonté d'un organe de fixation d'électrode 341, vient soutenir une semelle isolante par exemple en bakélite 342 de l'électrode proprement dite 343.

A l'examen de ce premier mode de réalisation, il apparaît que les bras 21 et 22 du parallélogramme assurent le déplacement du montant chargé 12, mais participent très peu à l'équilibrage de la charge, qui est réalisée principalement par le bras 23. Par contre, l'ensemble des deux bras 21 et 22 possède du fait de sa construction en parallélogramme une rigidité très grande à la torsion latérale provoquée par un positionnement excentré de la charge sur le plateau 10.

De son côté, le bras 23 équilibre la charge par le rappel élastique qu'il permet du fait de son encastrement dans le montant fixe ainsi que dans le montant mobile. A cause de sa section droite réduite, l'extrémité mobile 230 encastrée par le montant chargé 12 reste sensiblement horizontale, et généralement parallèle à l'extrémité encastrée dans le montant fixe 11, ainsi que l'indique la fig. 1A. De plus, la section réduite utilisée dans la portion 230 diminue la transmission sur la partie normale 23 du bras du couple de torsion latérale qui peut résulter d'un positionnement excentré de la charge sur le plateau 10.

Il en résulte un découplage en torsion entre montant chargé 12 et le bras 23, et en particulier entre le porte-électrode 33. En fixant ainsi l'électrode mobile 343 sur ce support 33, on traduit la charge appliquée sur le plateau 10 en une translation-rotation qui est proportionnelle. Plus le point de fixation 330 est rapproché du montant chargé 12, plus la tangente au bras 23 à ce point est proche de l'horizontale. De ce fait, l'inclinaison longitudinale de l'électrode mobile 343 en charge est faible et son mouvement par rapport à l'electrode fixe 320 se rapproche dont d'une rotation pure qu'il est alors très facile de traduire en une mesure linéarisable sans difficulté par des circuits électroniques. A ce niveau, on se rappellera que l'inclinaison latérale parasite de l'électrode mobile 343 sous l'effet d'une charge latérale excentrée est rendue très faible du fait de la structure particulière du barreau 23 et de sa portion 230.

La fig. 2 illustre un second mode de réalisation de l'invention qui diffère assez peu du premier.

Les différences consistent essentiellement dans la structure particulière du bras intermédiaire 23, qui est maintenant relié d'une part au montant chargé 12 par un étranglement mince 232, et d'autre part au montant fixe 11 par un étranglement moins prononcé 231. Du fait que l'étranglement 231 possède une section droite bien supérieure, c'est lui qui fournit l'essentiel du rappel élastique appliqué au bras 23, et par l'intermédiaire de celui-ci au montant chargé 12.

En utilisant ainsi deux affaiblissements différents aux extrémités du bras intermédiaire 23, on obtient un plus grand découplage en torsion, dû à un positionnement excentré de la charge, entre le montant chargé 12 et le barreau 23. Cela étant, il résulte de cette structure que la fixation de l'électrode mobile par son support 33 intervient en 331 et 332, à plus grande distance que précédemment vis-à-vis du montant chargé 12, d'où une sensibilité un peu moins bonne. A partir du porte-électrode mobile 33, le soutien de l'électrode mobile 343 s'effectue exactement de la manière décrite à propos de la fig. 1.

On notera aussi que dans ce second mode de réalisation, du fait de sa fixation aux montants fixe et chargé par l'intermédiaire de deux étranglements, le bras 23 est soumis à un mouvement de translation-rotation qui est plus pur que dans le premier mode de réalisation, d'où une linéarité encore plus grande des signaux obtenus au niveau du transducteur capacitif réalisé par les première et seconde électrodes.

La fig. 3 illustre le troisième mode de réalisation particulier de la présente invention. Il diffère des précédents en ce que le support 35 de l'électrode mobile est maintenant fixé sur le montant chargé 12, en deux points désignés par les références 350 et 351. En revanche, comme précédemment, le support comprend une base en acier comprenant les parties 35 et 341, une semelle isolante en bakélite 342, et l'électrode mobile proprement dite 343.

Dans ce troisième mode de réalisation, l'électrode mobile se déplace en restant normalement strictement parallèle à l'électrode fixe. Le mouvement entre les deux électrodes est alors une pure translation, d'où une linéarisation encore plus facile du signal de mesure obtenu sur le transducteur capacitif. Toutefois, ceci n'est vrai que si la charge est parfaitement centrée sur le plateau porte-charge 10. Dans le cas contraire, il apparaît un couple de torsion perturbateur exercé sur le montant chargé 12, qui tend à se traduire par une rotation de l'électrode mobile 343 autour d'un axe horizontal situé dans le plan de la fig. 3. Pour limiter les effets néfastes d'une telle torsion, il est avantageux de choisir la forme des électrodes en conséquence, en donnant à celles-ci une forme allongée dans le sens de la direction horizontale de la fig. 3 et une faible largeur dans l'autre sens, c'est-à-dire dans un plan perpendiculaire à cette même fig. 3. Si la surface utile d'électrode est définie de manière préétablie, l'électrode utilisée selon la fig. 3 est alors plus longue dans le sens de la direction des bras 23 et moins large dans la direction perpendiculaire au plan de la figure que ça n'était le cas pour les figs 1 et 2, où l'électrode étant sensiblement isométrique, comme précédemment indiqué.

Dans le mode de réalisation de la fig. 3, il est avantageux d'utiliser comme dans les modes de réalisation précédents un bras intermédiaire 23 qui relie entre eux le montant fixe 11 et le montant chargé 12, à la manière d'une poutre encastrée qui est ici de section constante, et qui fournit alors l'essentiel du rappel élastique appliqué au montant chargé 12. Une variante très simple consiste cependant à ne pas utiliser un tel bras, en rendant les étranglements 211, 212, 221 et 222 un peu plus épais, de manière que ce soit ceux-ci qui jouent le rôle du rappel élastique (fig. 5).

Dans la réalisation illustrée sur la fig. 3, on obtient en charge une déformation qui est illustrée schématiquement sur la fig. 3A, et permet de voir que les deux électrodes fixe et mobile restent généralement parallèles entre elles.

Dans les différents modes de réalisation qui précèdent, on obtient finalement entre les deux électrodes 320 et 343 une capacité qui présente une certaine valeur au repos en l'absence de charge, et dont la valeur en charge est liée à la valeur de la charge elle-même. Bien qu'on puisse envisager différentes façons de mesurer la valeur de cette capacité pour accéder à la charge, il est préférable d'utiliser les moyens décrits dans la demande de brevet français n° 7 728 758 déposée le 23 septembre 1977 au nom de la demanderesse. En pareil cas, la charge est mesurée en faisant le rapport de la capacité définie par le transducteur de charge capacitif (électrodes 320 et 343) à la capacité d'un condensateur de référence.

Les expériences conduites par la demanderesse ont montré que les mesures ainsi réalisées dépendent de la température pour deux raisons; d'une part le module d'élasticité ou module d'Young du matériau fournissant le rappel élastique varie en fonction de la température, et d'autre part les dimensions des différents éléments du récepteur de charge, et notamment des supports des électrodes ainsi que la surface des électrodes elles-mêmes varient en fonction de la température.

La demanderesse a observé que l'on pouvait compenser de manière satisfaisante les effets de variations de température en procédant comme suit: le condensateur de référence est tel que ses supports sont agencés en sorte que la variation relative de l'écartement des électrodes, en fonction de la température soit égale à la variation relative du module d'élasticité du matériau qui fournit la force du rappel élastique.

Les supports du condensateur de mesure sont agencés de manière identique de telle sorte que la variation relative de l'écartement des électrodes en l'absence de charge ou sous une charge constante de tare, soit égale à la variation relative du module d'élasticité en fonction de la température. Si le condensateur de référence et le transducteur capacitif sont constitués d'électrodes présentant la même configuration, les mêmes dimensions et le même écartement à vide, la compensation est alors quasi rigoureuse.

Ce qui précède s'applique à l'évidence aux différents modes de réalisation de l'invention. La fig. 4 vient montrer comment on peut l'appliquer au mode de réalisation de la fig. 3.

Les différents éléments constituant les électrodes et leur support sont repérés par leur longueur dilatable en température (fig. 4) et leur coefficient de dilatation fonction de la matière dont ils sont constitués.

Plus précisément, sur la fig. 4:
- $l_1$ représente l'entraxe des points de fixation sur les montants,
- $l_2$ représente la longueur dilatable des supports d'électrodes, 31 et 35, fixés respectivement aux montants fixe 11 et chargé 12, prise perpendiculairement au plan des électrodes 320, 343,
- $l_3$ représente la longueur dilatable des parties isolantes de l'électrode supérieure 320, prise perpendiculairement au plan des électrodes,
- $l_4$ et $l_5$ représentent respectivement les longueurs dilatables des électrodes supérieure 320 et inférieure 343 prises perpendiculairement au plan des électrodes,
- $l_6$ représente la longueur dilatable des parties isolantes de l'électrode inférieure 343, prise perpendiculairement au plan des électrodes.

On définit d'autre part les coefficients de dilatation suivants:
- $a_1$ représente le coefficient de dilatation du matériau support, par exemple en métal, formant le parallélogramme déformable,
- $a_2$ représente le coefficient de dilatation des supports 31 et 35,
- $a_3$ représente le coefficient de dilatation des parties isolantes de l'électrode support 320,
- $a_4$ représente le coefficient de dilatation des électrodes 320, 343,
- $a_6$ représente le coefficient de dilatation des parties isolantes de l'électrode inférieure 343.

En outre, la valeur de l'écartement entre les faces actives des électrodes est repérée e et la variation du module d'élasticité à compenser est notée $\Delta E$.

Sur cette base, selon la disposition représentée sur la fig. 4, la condition à remplir afin que la compensation de la variation du module d'élasticité en température soit réalisée, s'écrit alors:

$$l_1 \cdot a_1 - 2l_2 \cdot a_2 + l_3 \cdot a_3 - (l_4 + l_5) \cdot a_4 - l_6 \cdot a_6 = e \cdot \Delta E$$

la valeur de e est donnée en fonction de la valeur de la capacité qui a été choisie pour les électrodes à une température de référence qui peut être l'ambiante, les longueurs des électrodes isolées étant choisies dans un type de construction, les grandeurs $e_3$, $e_4$, $l_5$ et $l_6$ sont donc connues.

L'équation de compensation précitée permet d'obtenir la valeur $l_2$ puis de déduire la valeur $l_1$ en fonction des coefficients de dilatation des matériaux choisis.

Le raisonnement développé pour le condensateur de mesure dont une des électrodes 343 est fixée sur le montant mobile 12, est parfaitement valable pour le condensateur de référence; les supports des électrodes de ce dernier étant alors fixés sur un support non chargé de même matériau que celui du récepteur de charge.

**Revendications**

1. Récepteur de charge pour pesage, du type comportant un montant fixe (11) solidaire d'un bâti (20), un montant chargé (12) solidaire d'un plateau porte-charge (10), et deux bras (21, 22) articulés sur ces montants pour former avec eux un parallélogramme déformable, dans lequel l'ensemble des deux montants et des deux bras est réalisé d'une seule pièce et les articulations sont définies par des étranglements (211, 212, 221, 222) de la matière constitutive, caractérisé par le fait que le récepteur comporte en outre une première électrode (320) montée solidaire du montant fixe (11), et une seconde électrode (343) montée sur une partie du parallélogramme qui est mobile sous l'effet de la charge portée par le plateau (10), une partie de l'ensemble étant conformée pour appliquer un rappel élastique au montant chargé (12) lorsqu'une masse est déposée sur le plateau de telle sorte que lesdites première (320) et seconde (343) électrodes forment en combinaison un transducteur de charge à condensateur dont la capacité, en charge, est liée à la valeur de la charge elle-même, et par le fait que les supports du transducteur de charge capacitif, reliant respectivement les première (320) et seconde (343) électrodes au montant fixe (11) et à ladite partie du parallélogramme mobile sous l'effet de la charge, sont agencés en sorte que la variation relative de l'écartement au repos de leurs électrodes en fonction de la température soit égale à la variation relative en fonction de la température du module d'élasticité du matériau de la partie fournissant la force de rappel élastique opposée à la charge.

2. Récepteur de charge selon la revendication 1, caractérisé par le fait qu'il comporte un troisième bras (23) dont les extrémités font corps avec le montant fixe (11) et le montant chargé (12), de telle sorte que ce troisième bras (23) fournisse l'essentiel du rappel élastique imprimé au montant chargé en fonction de sa charge.

3. Récepteur de charge selon la revendication 2, caractérisé par le fait que les extrémités du troisième bras (23) sont respectivement encastrées dans le montant fixe (11) et le montant chargé (12), que la seconde électrode (343) est montée solidaire du troisième bras (23) en un point (330) voisin du montant chargé, et que le troisième bras présente une section droite (230) réduite entre ce point (330) et le montant chargé (12), si bien que la seconde électrode (343) est peu sensible à des couples de torsion latéraux exercés sur le montant chargé en raison d'un positionnement excentré de la charge.

4. Récepteur de charge selon la revendication 2, caractérisé par le fait que l'extrémité du troisième bras (23) côté montant chargé (12) présente un étranglement mince (232) tandis que son extrémité côté montant fixe (11) présente un étranglement (231) moins prononcé, fournissant l'essentiel du rappel élastique pour le montant chargé, et par le fait que la seconde électrode (343) est montée solidaire du troisième bras (23) entre ses deux étranglements (231, 232), si bien que cette seconde électrode (343) est très peu sensible à des couples de torsion latéraux exercés sur le montant chargé en raison d'un positionnement excentré de la charge.

5. Récepteur de charge selon l'une des revendications 3 et 4, caractérisé par le fait que les première (320) et seconde (343) électrodes présentent des surfaces sensiblement isométriques, la surface étant légèrement plus grande pour l'une des électrodes que pour l'autre.

6. Récepteur de charge selon l'une des revendications 1 et 2, caractérisé par le fait que la seconde électrode (343) est montée solidaire du montant chargé (12), et que les deux électrodes (320, 343) présentent des surfaces allongées selon la direction générale des bras, la surface étant légèrement plus grande pour l'une des électrodes que pour l'autre.

7. Récepteur de charge selon la revendication 6, prise en dépendance de la revendication 2, caractérisé par le fait que la section droite du troisième bras (23) est sensiblement constante.

8. Récepteur de charge selon l'une des revendications 1 à 7, dans lequel la charge est mesurée en faisant le rapport de la capacité du transducteur de charge capacitif à celle d'un condensateur de référence, caractérisé par le fait que les supports du condensateur de référence sont agencés en sorte que la variation relative de l'écartement au repos de ses électrodes en fonction de la température soit égale à la variation relative en fonction de la température du module d'elasticité du matériau de la partie fournissant la force de rappel élastique opposée à la charge.

**Claims**

1. A load receiver for weighing, of the type having a fixed upright (11) rigidly connected to a support (20), a loaded upright (12) rigidly connected to a load carrying tray (10), and two arms (21, 22) articulated on these uprights for forming with them a deformable parallelogram, in which the assembly of the two uprights and the two arms is constituted of a single piece and the articulations are defined by narrowings (211, 212, 221, 222) of the constituent material, characterised by the fact that the receiver has in addition a first electrode (320) mounted rigidly with the fixed upright (11), and a second electrode (343) mounted on a part of the parallelogram which is movable under the effect of the load carried by the tray (10), a part of the assembly being formed for applying a resilient restoring force to the loaded upright (12) when a mass is deposited on the tray in such a way that the said first and second electrodes (320, 343) form in combination a condenser load transducer of which the capacity, when loaded, is linked to the value of the load itself, and by the fact that the supports of the capacitive load transducer, respectively connecting the first and second electrodes (320, 343) to the fixed upright (11) and the said part of the parallelogram which is movable under the effect of the load, are arranged so that the relative variation of separation at rest of their electrodes as a function of temperature is equal to the relative variation as a function of temperature of the modulus of elasticity of the material of the part providing the resilient restoring force opposed to the load.

2. A load receiver according to claim 1, characterised by the fact that it has a third arm (23) of which the ends are integral with the fixed upright (11) and the loaded upright (12), in such manner that the third arm (23) provides the main part of the resilient restoring force imparted to the loaded upright as a function of its load.

3. A load receiver according to claim 2, characterised by the fact that the ends of the third arm (23) are respectively embedded in the fixed upright (11) and the loaded upright (12), that the second electrode (343) is rigidly connected to the third arm (23) at a point (330) neighbouring the loaded upright, and that the third arm has a cross-section (230) reduced between this point (330) and the loaded upright (12) so that the second electrode (343) is only slightly sensitive to couples of lateral torsion exerted on the loaded upright by reason of eccentric positioning of the charge.

4. A load receiver according to claim 2, characterised by the fact that the end of the third arm (23) adjoining the loaded upright (12) has a thin narrowing while its end adjoining the fixed upright (11) has a less pronounced narrowing (231), providing the main part of the resilient restoring force for the loaded upright, and by the fact that the second electrode (343) is rigidly connected to the third arm (23) between its two narrowings (231, 232), so that this second electrode (343) is very slightly sensitive to couples of lateral torsion exerted on the loaded upright by reason of eccentric positioning of the charge.

5. A load receiver according to either of claims 3 and 4, characterised by the fact that the first and second electrodes (320, 343) have substantially isometric surfaces, the surface being slightly greater for one of the electrodes than for the other.

6. A load receiver according to either of claims 1 and 2, characterised by the fact that the second electrode (343) is rigidly connected to the loaded upright (12) and that the two electrodes (320, 343) have surfaces elongated in the general direction of the arms, the surface being slightly greater for one of the electrodes than for the other.

7. A load receiver according to claim 6, when appendant to claim 2, characterised by the fact that the cross-section of the third arm is substantially constant.

8. A load receiver according to any one of claims 1 to 7, in which the load is measured by taking the ratio of the capacity of the capacitive load transducer to that of a reference condenser, characterised by the fact that the supports of the reference condenser are arranged so that the relative variation of the spacing at rest of their electrodes as a function of temperature is equal to the relative variation as a function of temperature of the modulus of elasticity of the part providing the resilient restoring force opposed to the load.

**Patentansprüche**

1. Lastaufnahmekörper zum Wiegen, mit einer festen, mit dem Gehäuse (20) verbundenen Stütze (11), mit einer belasteten, mit einer lasttragenden Platte (10) verbundenen Stütze (12) und mit zwei Armen (21, 22), welche an diesen Stützen derart angelenkt sind, dass sie mit diesen ein verformbares Parallelogramm bilden, wobei die beiden Stützen und die beiden Arme aus einem einzigen Stück und die Gelenke als Einschnürungen (211, 212, 122, 122) des dieses Stück bildenden Materials ausgebildet sind, dadurch gekennzeichnet, dass der Lastaufnahmekörper darüber hinaus eine erste, mit der festen Stütze (11) verbundene erste Elektrode (320) sowie eine zweite Elektrode (343) aufweist, die auf einem Teil des Parallelogramms befestigt ist, welches unter Einwirkung der von der Platte (10) getragenen Last bewegbar ist, wobei ein Teil der Anordnung derart ausgebildet ist, dass er eine elastische Rückholkraft auf die belastete Stütze (12) ausübt, wenn eine Masse auf die Platte gelegt wird, so dass die beiden Elektroden (320, 343) zusammen einen Last-Wandler mit Kondensator bilden, dessen Kapazität bei Belastung vom Wert der Last selbst abhängt, dass die Träger des kapazitiven Last-Wandlers (transducteur de charge capacitif), welche die erste (320) bzw. die zweite (343) Elektrode mit der festen Stütze (11) und mit besagtem Teil des unter Einwirkung der Last beweglichen Parallelogramms verbinden, derart ausgebildet sind, dass die relative Veränderung des Ruheabstandes ihrer Elektroden in Abhängigkeit von der Temperatur gleich ist der relativen, temperaturabhängigen Veränderung des Elastizitätsmoduls des Materials des Teiles, welches die elastische, der Last entgegengestellte Rückholkraft liefert.

2. Lastaufnahmekörper nach Anspruch 1, dadurch gekennzeichnet, dass ein dritter Arm (23) vorgesehen ist, dessen Enden mit der festen Stütze (11) und der belasteten Stütze (12) fest verbunden sind, so dass dieser dritte Arm (23) im wesentlichen die elastische Rückholkraft liefert, welche abhängig von der Belastung auf die belastete Stütze wirkt.

3. Lastaufnahmekörper nach Anspruch 2, dadurch gekennzeichnet, dass die Enden des dritten Armes (23) in die feste Stütze (11) bzw. in die belastete Stütze (12) eingelassen sind, dass die zweite Elektrode (343) fest am dritten Arm (23) an einem Punkt (330) angeordnet ist, der sich in der Nähe der belasteten Stütze befindet, und dass der dritte Arm einen geraden Abschnitt (230) aufweist, welcher zwischen diesem Punkt (330) und der belasteten Stütze (12) verjüngt (reduite) ist, dergestalt, dass die zweite Elektrode (343) wenig empfindlich ist gegenüber seitlichen Torsionspaaren, welche auf die belastete Stütze dann ausgeübt werden, wenn die Last exzentrisch aufliegt.

4. Lastaufnahmekörper nach Anspruch 2, dadurch gekennzeichnet, dass das Ende des dritten Armes (23), auf der der belasteten Stütze (12) benachbarten Seite eine enge Einschnürung (232) aufweist, wogegen sein der festen Stütze (11) benachbartes Ende einer weniger ausgeprägte Einschnürung (231) aufweist, wodurch im wesentlichen die elastische Rückholkraft für den belasteten Träger geliefert wird, und dass die zweite Elektrode (343) fest am dritten Arm (23) zwischen seinen beiden Einschnürungen (231, 232) angeordnet ist, dergestalt, dass diese zweite Elektrode (343) sehr wenig empfindlich ist gegenüber seitlichen Torsionspaaren, welche auf die belastete Stütze ausgeübt werden, wenn die Last exzentrisch aufliegt.

5. Lastaufnahmekörper nach einem der Ansprüche 3 und 4, dadurch gekennzeichnet, dass beide Elektroden (320, 343) im wesentlichen isometrische Oberflächen aufweisen, wobei die Oberfläche der einen Elektrode geringfügig grösser als die der anderen Elektrode ist.

6. Lastaufnahmekörper nach einem der Ansprüche 1 und 2, dadurch gekennzeichnet, dass die zweite Elektrode (343) an der belasteten Stütze (12) fest montiert ist und dass beide Elektroden (320, 343) Oberflächen aufweisen, welche in der allgemeinen Richtung der Arme gestreckt (allongees) sind, wobei die Oberfläche der einen Elektrode geringfügig grösser als die der anderen Elektrode ist.

7. Lastaufnahmekörper nach Anspruch 6, welcher von Anspruch 2 abhängt, dadurch gekennzeichnet, dass der Querschnitt des dritten Armes (23) im wesentlichen konstant ist.

8. Lastaufnahmekörper nach einem der Ansprüche 1 bis 7, wobei die Last dadurch gemessen wird, dass man das Verhältnis der Kapazität des kapazitiven Last-Wandlers (du transducteur de charge capacitif) mit der eines Bezugskondensators vergleicht, dadurch gekennzeichnet, dass die Träger des Bezugskondensators derart ausgebildet sind, dass die relative Veränderung des Ruheabstandes ihrer Elektroden in Abhängigkeit von der Temperatur gleich ist der relativen, temperaturabhängigen Veränderung des Elastizitätsmoduls des Materials des Teiles, welches die elastische, der Last entgegengestellte Rückholkraft liefert.

FIG.1

FIG.1A

FIG.2

0 017 581

FIG.3

FIG.3A

FIG.4

0 017 581

FIG. 5